# EUROPEAN PATENT APPLICATION

(11) **EP 4 613 711 A1**
(43) Date of publication of application: **10.09.2025**
(21) Application number: 24161186.2
(22) Date of filing: 04.03.2024
(51) Int. Cl.: C01D 5/08, C05C 3/00, C01D 5/00, C02F 1/58, H01M 10/54

(54) **METHOD FOR TREATING SULFATE IN INDUSTRIAL PROCESSES**

(71) Applicant: Umicore Battery Materials Finland Oy, 67900 Kokkola (FI)
(72) Inventor: ERIKSSON, Marten, Kokkola (FI); TUIKKA, Matti, Kokkola (FI); MARJELUND, Janne, Kokkola (FI)
(74) Representative: Umicore RDI Patent Department

(57) **Abstract**

Disclosed a method for treating sulfate in an industrial process, the method comprising the steps of: a) contacting a first solution containing metal sulfate, preferably transition metal sulfate, with a second solution containing potassium hydroxide, whereby obtaining: a.
a first precipitated material comprising metal hydroxide and b. a third solution containing potassium sulfate; b) recovering the third solution; c) providing a salting-out agent, preferably containing at least one of a source of potassium hydroxide and a source of ammonia; d) adding the salting-out agent to and mixing with the third solution, whereby obtaining: a. a second precipitated material comprising potassium sulfate and b. a fourth solution containing the salting-out agent; and e) recovering the second precipitated material and the fourth solution.

## Description

### TECHNICAL FIELD

Generally, the present invention relates to a method for treating sulfate in industrial processes.

### BACKGROUND

In various industries, the treatment of metal sulfates with alkali hydroxides often results in the generation of alkali sulfates. These byproducts are typically considered waste process streams or solutions. A common example of this can be found in the battery industry, where potassium hydroxide is used as a pH controlling agent or as a precipitant in the co-precipitation of sulfate salt-based transition metal raw materials, for preparing precursors of cathode active material. This process leaves behind a residue solution, known as a precipitation mother liquor, which contains high levels of potassium sulfate.

Considering increasing sustainability goals and rising raw material costs, there is a growing interest in finding ways to repurpose these waste process streams rather than simply discharging or landfilling them. For instance, if a waste process stream contains potassium sulfate, it could potentially be processed into a fertilizer compound. However, for this to be economically feasible, the potassium sulfate must be pure and obtained at a high yield.

Currently, the most common method for obtaining such potassium sulfate is evaporative crystallization. In evaporative crystallization, the crystallization of potassium sulfate is resulting from the evaporation of the solvent. So, this process creates a vapor and a suspension of potassium sulfate crystals in mother liquor. However, this process is energy-intensive and not particularly efficient. Therefore, there is a clear need for more efficient and sustainable methods for processing waste process solutions containing potassium sulfate. This is particularly relevant in industries such as the battery industry, where large amounts of potassium sulfate are produced as a byproduct.

### SUMMARY OF THE INVENTION

It is found that the enhancement of crystallization yield is achievable through the strategic modification, specifically reduction, of the solubility of potassium sulfate in a solution derived from the metal sulfate, preferably transition metal sulfate, co-precipitation reaction (referred to as a precipitation mother liquor). This is accomplished by introducing a solvation agent into the solution and thoroughly mixing until the precipitation of potassium sulfate is achieved. Essentially, this process involves salting out the dissolved potassium sulfate by the addition of a solvation agent or synonymously salting-out agent (e.g., potassium hydroxide and/or ammonium source) until crystallization is successfully obtained. Through conducted experiments, it was observed that the method according to the present invention facilitates the attainment of highly pure crystallized potassium sulfate with a remarkable yield. The solution remaining after the salting-out reaction can be effectively reused in a co-precipitation reaction process either in its entirety or, alternatively, by fractionating it into a solution containing ammonia and another solution containing potassium hydroxide. Utilizing one or both of these fractions in the co-precipitation reaction and/or the salting-out reaction enables an efficient and cyclic circulation of materials, enhancing overall process sustainability.

Thus, the present invention provides a method for treating sulfate in an industrial process, the method comprising the steps of:
a) contacting a first solution containing metal sulfate, preferably transition metal sulfate, with a second solution containing potassium hydroxide, whereby obtaining
   ∘ a first precipitated material comprising metal hydroxide and
   ∘ a third solution containing potassium sulfate;
b) recovering the third solution;
c) providing a salting-out agent, preferably containing at least one of a source of potassium hydroxide and a source of ammonia;
d) adding the salting-out agent to and mixing with the third solution, whereby obtaining
   ∘ a second precipitated material comprising potassium sulfate and
   ∘ a fourth solution containing the salting-out agent; and
   recovering the second precipitated material and the fourth solution.

The step a) is a precipitation process, which may be for example a process for preparing precursors of cathode active material for secondary batteries. For example, the first solution may be a transition metal aqueous solution prepared by dissolving one or more transition metal raw material such as nickel sulfate, cobalt sulfate, manganese sulfate, etc. in water. For example, the second solution maybe a potassium sulfate aqueous solution prepared by dissolving potassium sulfate in water. The first solution, the second solution, and optionally ammonium ion-containing solution, are introduced into a reactor to proceed with a co-precipitation reaction. Reaction conditions and methods for precipitation or co-precipitation are generally known. The resulting material of the co-precipitation process is a slurry containing a precipitated material comprising metal hydroxide and a solution containing potassium sulfate.

According to the invention, the third solution containing potassium sulfate is recovered and mixed with a salting-out agent. The step d) is a precipitation process. The resulting material is a slurry containing a precipitated material comprising potassium sulfate and a solution containing the salting-out agent. The obtained precipitated material comprising potassium sulfate may be used in fertilizer products and thus has high commercial value, and the obtained solution containing the salting-out agent may be reused in the method according to the invention.

Thus, the present invention enables an efficient material circulation, contributing to enhanced process sustainability.

The main embodiments are characterized in the independent claims. Various embodiments are disclosed in the dependent claims. The embodiments and examples recited in the claims and the specification are mutually freely combinable unless otherwise explicitly stated.

### DETAILED DESCRIPTION OF THE INVENTION

In the following detailed description, preferred embodiments are described in detail to enable practice of the invention. Although the invention is described with reference to these specific preferred embodiments, it will be understood that the invention is not limited to these preferred embodiments. To the contrary, the invention includes numerous alternatives, modifications and equivalents as will become apparent from consideration of the following detailed description and accompanying drawings.

The term "comprising", as used herein and in the claims, should not be interpreted as being restricted to the means listed thereafter; it does not exclude other elements or steps. It needs to be interpreted as specifying the presence of the stated features, integers, steps or components as referred to, but does not preclude the presence or addition of one or more other features, integers, steps or components, or groups thereof. Thus, the scope of the expression "a composition comprising components A and B" should not be limited to compositions consisting only of components A and B. It means that with respect to the present invention, the only relevant components of the composition are A and B. Accordingly, the terms "comprising" and "including" encompass the more restrictive terms "consisting essentially of" and "consisting of".

In this specification, if any numerical ranges are provided, the ranges include also the upper and lower values. It should be understood that in this specification, the term "at least" encompasses the concept of "equal to and/or more than", and the term "at most" encompasses the concept of "equal to and/or less than".

In the present disclosure, solutions are preferably aqueous solutions, when applicable.

As mentioned, the present invention enables an efficient material circulation, contributing to enhanced process sustainability. It is provided as a method for treating sulfate in an industrial process, the method comprising the steps of:
a) contacting a first solution containing metal sulfate, preferably transition metal sulfate, with a second solution containing potassium hydroxide, whereby obtaining
   a. a first precipitated material comprising metal hydroxide and
   b. a third solution containing potassium sulfate;
b) recovering the third solution;
c) providing a salting-out agent, preferably containing at least one of a source of potassium hydroxide and a source of ammonia;
d) adding the salting-out agent to and mixing with the third solution, whereby obtaining
   a. a second precipitated material comprising potassium sulfate and
   b. a fourth solution containing the salting-out agent; and
recovering the second precipitated material and the fourth solution.

The step a) may be a precipitation process, for example a process for preparing precursors of cathode active material for secondary batteries. For example, the first solution may be a transition metal aqueous solution prepared by dissolving one or more transition metal raw material such as nickel sulfate, cobalt sulfate, manganese sulfate, etc. in water. For example, the second solution maybe a potassium sulfate aqueous solution prepared by dissolving potassium sulfate in water. The first solution, the second solution, and optionally ammonium ion-containing solution, are introduced into a reactor to proceed with a co-precipitation reaction. Reaction conditions and methods for precipitation or co-precipitation are generally known. The resulting material of the co-precipitation process is a slurry containing a precipitated material comprising metal hydroxide and a solution containing potassium sulfate.

The first solution containing metal sulfate may preferably be a transition metal cation-containing solution, wherein said transition metal may be one or more of nickel (Ni), cobalt (Co), and manganese (Mn). For example, the first solution may be a transition metal aqueous solution prepared by dissolving NiSO₄, CoSO₄ and MnSO₄ into deionized water in the required stoichiometric ratios such that a molar ratio of Ni:Mn:Co is x:y:z, wherein 0.10 ≤ x ≤ 0.99, 0.00 ≤ y ≤ 0.85, 0.00 ≤ z ≤ 0.40, x+y+z ≤ 1.

The second solution containing potassium hydroxide may be an alkaline solution. By being alkaline it is meant the pH of the solution is at an alkaline range, such as pH of 8 or more, 9 or more, 10 or more, 11 or more, or 12 or more. Preferably, the step of contacting the first solution containing metal sulfate, preferably transition metal sulfate, with the second solution containing potassium hydroxide includes forming and mixing a reaction mixture comprising the first solution containing metal sulfate, preferably transition metal sulfate, and the second solution containing potassium hydroxide. The reaction mixture is preferably alkaline. In such a case, the second solution containing potassium hydroxide may act as a pH controlling agent and/or as a precipitant in the co-precipitation.

Optionally, the step a) contains contacting ammonium ion-containing solution with the first solution containing metal sulfate, preferably transition metal sulfate, and the second solution containing potassium hydroxide. The ammonium ion-containing solution, as a complexing agent, may include, but not be limited to, NH₄OH, (NH₄)₂SO₄, NH₄NO₃, NH₄Cl, CH₃COONH₄, NH₄CO₃, or a combination thereof. For example, the ammonium ion-containing solution may be an ammonia aqueous solution, also known as ammonia water, ammonium hydroxide, ammoniacal liquor, ammonia liquor, aqua ammonia, or aqueous ammonia, i.e. a solution of ammonia in water. It can be denoted by the symbols NH₃(aq).

The resulting material of the co-precipitation process is a slurry containing a precipitated material comprising metal hydroxide and a solution containing potassium sulfate. The first precipitated material comprising metal hydroxide may be a precursor of cathode active material for secondary batteries; the metal hydroxide is thus preferably transition metal hydroxide. Thus, in some embodiments according to the present invention, the industrial process is a process of battery industry, preferably wherein the first solution is an aqueous metal sulfate, preferably transition metal sulfate, salt solution of M, said M comprising at least one of Ni, Mn, and Co, wherein the obtained first precipitated material being a particulate hydroxide or oxyhydroxide of M. Thus, the first precipitated material comprising metal hydroxide may contain,
- Ni in a content x, wherein 10.0 ≤ x ≤ 99.0 mol%,
- Mn in a content y, wherein 0 ≤ y ≤ 85.0 mol%,
- Co in a content z, wherein 0 ≤ z ≤ 40.0 mol%,
- Al in a content q, wherein 0 ≤ q ≤ 10.0 mol%, and
- one or more additional elements in a content r, wherein the additional elements are elements from the list of B, Ba, Ca, Ce, Cr, Fe, La, Mg, Mo, Nb, S, Si, Sr, Ti, Y, V, W, Zn, and Zr, wherein 0 ≤ r ≤ 5.0 mol%,
and wherein x + y + z + q + r = 100.0 mol%.

The third solution containing potassium sulfate may be a solution derived from the metal sulfate, preferably transition metal sulfate, co-precipitation reaction, or a residue solution left behind by the co-precipitation process. It is known as a precipitation mother liquor. Thus, the first precipitated material and the third solution can be separated and recovered by using any suitable methods and devices for separating and recovering solids and liquids, for example by filtering.

The recovered third solution containing potassium sulfate is then mixed with a salting-out agent. Salting out, also known as salt-induced precipitation, salt fractionation, anti-solvent crystallization, precipitation crystallization, or drowning out, is a purification technique that utilizes the reduced solubility of certain molecules in a solution of very high ionic strength. The step d) may be a precipitation process. The resulting material is a slurry containing a precipitated material comprising potassium sulfate and a solution containing the salting-out agent. Thus, in the context of the present disclosure, a salting-out agent refers to a chemical substance that reduces solubility of potassium sulfate in the third solution (precipitation mother liquor). Examples of such salting-out agent include, but are not limited to, potassium hydroxide and a source of ammonia. Preferably, the salting-out agent contains at least one of a source of potassium hydroxide and a source of ammonia, and more preferably the salting-out agent contains both a source of potassium hydroxide and a source of ammonia.

Herein a source of ammonia refers to any forms of ammonia and its derivatives. Examples of source of ammonia include, but are not limited to, ammonia gas, ammonia solution and ammonia salt, such as ammonium sulfate. The source of ammonia may be thus an ammonium ion-containing solution, as defined previously. In some embodiments, the salting-out agent comprises the source of ammonia, and in step d) after mixing with the third solution, ammonia concentration is equal to or more than 90 g/L, preferably equal to or more than 95 g/L, more preferably equal to or more than 100 g/L, and most preferably equal to or more than 130 g/L. It is observed, that the higher the concentration of ammonia, the better the conversion rate of sulfate. It is thus advantageous to use ammonia gas as the source of ammonia, as it is easier to tailor the ammonia concentration on-site especially when a higher concentration, for example more than 100 g/L or more than 120 g/L, is desired, as the commercially available ammonia aqueous solution has limitation in concentration due to practical reasons, for example transportation.

The source of potassium hydroxide is preferably a potassium hydroxide provided in solid form and/or as a solution containing potassium hydroxide of 25 wt.% by weight or more, such as in the range 25-75 wt.%. In some embodiments, the salting-out agent comprises the source of potassium hydroxide, and in step d) after mixing with the third solution, potassium hydroxide concentration is equal to or more than 50 g/L, for example equal to or more than 100 g/L, or equal to or more than 150 g/L, preferably equal to or more than 200 g/L, for example equal to or more than 250 g/L and up to or equal to 650 g/L. It is observed, that the higher the concentration of KOH, the better the conversion rate of sulfate.

The obtained precipitated material comprising potassium sulfate from step d) may be used in fertilizer products and thus has high commercial value. The second precipitated material and the fourth solution can be separated and recovered by using any suitable methods and devices for separating and recovering solids and liquids, for example by filtering. In some embodiments, the recovering the second precipitated material comprises filtering the second precipitated material to obtain a composition containing potassium sulfate. Preferably, the composition comprises potassium of at least 40 wt.% and sulfur of at least 17 wt.%, so that the composition is readily suitable to be used as fertilizer.

The filtering process and equipment are generally known in the field. An example is provided below. Slurries are filtrated in a dewatering process to separate the solid particles from the liquid. The dewatering process may be realized by a belt filter having a moving endless filter cloth having a feed end onto which the slurry is distributed. The liquid of the slurry filtrates through the filter cloth permeable to the liquid, whereby a filter cake containing solid particles of the slurry is formed onto the filter cloth. The filter cake can then be washed in a washing phase by passing washing liquid through the filter cake, while the cake is resting on the moving filter cloth. The filtration of the liquids through the filter cloth is often enhanced by creating a partial vacuum on another side of the filter cloth than onto which the filter cake is formed. At the discharge end of the belt filter the filter cake is removed from the filter cloth and possibly conveyed to further processing phases outside the belt filter such as to an additional drying phase.

Accordingly, in some embodiments of the present invention, the method comprises washing a filter cake comprising the fourth solution and the second precipitated material with a washing liquid, said washing liquid may contain ammonia water.

The obtained solution containing the salting-out agent from step d), i.e. the fourth solution, may be recirculated and used in one or more steps of the present method. Thus, the method according to the present invention may comprise recycling the recovered fourth solution back to at least one of the steps a) to d). Optionally, the concentration of the fourth solution may be adjusted to a level that is suitable to be reused. Thus, in some embodiments, the recovering the fourth solution comprises concentrating, preferably by evaporating, the fourth solution.

In some embodiments, the salting out comprises the source of ammonia and the source of potassium hydroxide, and therefore the fourth solution contains the source of ammonia and the source of potassium hydroxide. In some embodiments, in order to efficiently reused separately ammonia and potassium hydroxide, the step of recovering the fourth solution may comprise separating ammonia from potassium hydroxide present in the fourth solution, for example by ammonia stripping. Ammonia stripping is generally well known, being a desorption process used to lower the ammonia content of an aqueous solution, for example a wastewater stream. The fourth solution comprising the source of ammonia which exists in the form of ammonium ions (NH₄⁺) together with dissolved ammonia gas (NH₃). Generally, in the pH7 to pH12 range, both NH₄⁺ and NH₃ are present in the fourth solution, and the amount of dissolved gas (NH₃) increases with temperature and pH. By adjusting the pH of the fourth solution to increase the proportion of NH₃, followed by contacting the fourth solution with air, ammonia gas is stripped and collected to be reused as the source of ammonia, for example as ammonia water after resolving the collected ammonia gas into water. Thus, in some embodiments, the recovering the fourth solution comprises ammonia separating, preferably by ammonia stripping, and obtaining a fifth solution containing a source of ammonia, and the remaining solution after ammonia separating is thus a sixth solution containing potassium hydroxide. The ammonia separating may be followed by concentrating, preferably by evaporating, the fifth solution, preferably to a concentration of ammonia of 170 g/L or more, such as in the range of 170-550 g/L, in the fifth solution. As appreciated by the skilled person the NH_{3(aq)} concentration can be measured by using a commercially available titrator, for example Metrhom 848 Titrino Plus. The sixth solution may also be concentrated, preferably by evaporating, to a concentration of KOH of 100 g/L or more, such as in the range of 100-300 g/L or more in the sixth solution.

The fifth solution containing ammonia may be used as a chelating agent at the step a) of the present method, by contacting the fifth solution with the first solution and the second solution. The fifth solution containing ammonia may also be used as the salting out agent at the steps c)-d) of the present method. The sixth solution may be used as the second solution at the step a) of the present method, optionally subsequent to concentrating, preferably by evaporating. The sixth solution may also be used as the salting out agent at the steps c)-d) of the present method.

According to the present method, the salting-out process in step d) may be further improved, in turns of efficiency, by adjusting the concentration of the third solution comprising potassium sulfate before the step d) and/or during the step d), for example by concentrating, preferably by evaporating, the third solution. Advantageously, a concentration of the sulfur in the third solution in the step d) is 15.00 g/L or more, such as in the range of 15.00-30.00 g/L, or 20.00 g/L or more, such as in the range of 20.00-50.00 g/L, as determined by ICP; and/or wherein a concentration of the potassium in the third solution in the step d) is 40.00 g/L or more, such as in the range of 40.00-80.00 g/L, or 50.00 g/L or more, such as in the range of 50.00-95.00 g/L, as determined by ICP.

Likewise, the concentration of the salting-out agent may be optimized. For example, when the salting-out agent comprises the source of ammonia being ammonia water, the salting-out agent may have an ammonia concentration of 170 g/L or more, such as in the range of 170-550 g/L, or a concentration of 300 g/L or more, such as in the range of 300-550 g/L, or a concentration of 400 g/L or more, such as in the range of 400-550 g/L. The higher the concentration, the less water needed, which facilitates the water balance especially when the method is implemented in an industrial scale. In some embodiments, the salting-out agent comprises the source of ammonia being ammonia gas, and therefore the water management is further improved. As appreciated by the skilled person the NH_{3(aq)} concentration can be measured by using a commercially available titrator, for example Metrhom 848 Titrino Plus.

In some preferred embodiments, the salting out agent comprises both of the source of ammonia and the source of potassium hydroxide. The source of potassium hydroxide and the source of ammonia may be added and mixed in any order. For example, the source of potassium hydroxide and the source of ammonia may be added and mixed by, admixing at least a part of the source of ammonia to the third solution before admixing the source of potassium hydroxide; admixing at least a part of the source of potassium hydroxide to the third solution before admixing the source of ammonia; or admixing the source of potassium hydroxide and the source of ammonia simultaneously. Advantageously, at least a part of the source of ammonia is admixed to the third solution before admixing the source of potassium hydroxide to the third solution, as the adding of KOH increases the mixture temperature and the solubility of NH₃ decreases when the mixture temperature increases. Thus, more NH₃ concentrated reaction mixture can be obtained by adding NH₃ before adding KOH. For the same reason, admixing at least a part of the source of potassium hydroxide to the third solution before admixing the source of ammonia is advantageous, when the mixture of potassium hydroxide and the third solution is adjusted, for example by cooling, to a temperature in favor of solubility of NH₃, before admixing the source of ammonia.

For the same reason, in the embodiments wherein the salting out agent comprises at least one of the source of ammonia and the source of potassium hydroxide, after the third solution and the salting-out agent are mixed and having a temperature T1, it is advantageous to adjust, for example by cooling, the mixture solution comprising the third solution and the salting-out agent to a temperature of 50 °C or less when T1 is more than 50 °C, such as to a temperature of 2-50 °C; preferably the method further comprising adjusting the mixture solution to 30 °C or less when T1 is more than 30 °C, such as 2-25 °C..

When the salting out agent comprises both of the source of ammonia and the source of potassium hydroxide, the molar ratio of ammonia to potassium hydroxide may be one of the following:
- a molar ratio of 1:1;
- a molar ratio with excess of the source of ammonia to the potassium hydroxide, such as 1.1:1 or more, 1.5:1 or more, 2:1 or more or 4:1 or more; and
- a molar ratio with excess of the potassium hydroxide to the source of ammonia, such of 1:1.1 or more, 1:1.5 or more, 1:2 or more or 1:4 or more.

In some embodiments, the salting-out agent comprises the source of ammonia and the source of potassium hydroxide, and in step d) after mixing with the third solution, potassium hydroxide concentration is equal to or more than 5 g/L, for example equal to or more than 15 g/L, or equal to or more than 25 g/L, preferably equal to or more than 30 g/L, for example equal to or more than 65 g/L. It is observed, that the higher the concentration of KOH, the better the conversion rate of sulfate. It is also observed, with the same added amount of KOH, the conversion rate can be significantly improved by also adding the source of ammonia, comparing to otherwise the same reaction conditions but ammonia. In other words, combination of the source of ammonia and the source of potassium hydroxide as the salting-out agent contributes to a synergistic effect with respect to the sulfate removal from the wastewater.

### Examples

The present invention is further illustrated with reference to some examples and comparative examples.

### Measurement methods used in the examples

### NH₃(aq) concentration analysis

The NH₃(aq) concentration was measured from a sample by end point titration using an instrument of Metrhom 848 Titrino Plus. 1 mL of a solution containing the NH₃ content to be measured was added to a titration vessel, followed by adding of 30-40 mL of deionized water and 1 mL of 1M NaOH. The obtained sample was the titrated to the end point by 0.1M HCl.

### X-ray diffraction analysis

The XRD spectra of the samples were measured with an X-ray diffractometer EMPYREAN^{®} by a manufacturer of PANalytical with the conditions as described in Table 1 below.

**Table 1 XRD measurement conditions**

| Anode material | Co |
|---|---|
| K-Alpha 1 wavelength | 1.78901 Å |
| Generator voltage | 40 kV |
| Tube current | 45 mA |
| Scan Range | 10-90 ° |
| Scan Step Size | 0.0130 ° |
| Scan step time | 178.24 s |
| Divergence slit | 0.355 ° |
| detector opening | 3.3482 ° |
| primary soller slit | 0.04 |

### Elemental composition analysis

The contents of K, Na and S in the obtained solid fraction and liquid fraction samples were measured by the Inductively Coupled Plasma - Optical Emission Spectrometry (ICP-OES) method using an Thermo iCAP 6000 Series ICP-OES instrument.

The measurement sample was prepared as follows for solid samples: 0.25 gram of a powder sample of each example was dissolved into deionized (DI) water in a 100 mL volumetric flask. The volumetric flask was filled with deionized (DI) water up to the 100 mL mark, followed by complete homogenization. 1 mL of the solution was taken out by a pipette and transferred into a 100 mL volumetric flask for the second dilution. An appropriate amount of a concentrated nitric acid was added by a pipette to achieve 5% HNO₃ solution when brought to volume with deionized water (DI) and then homogenized. Finally, this solution was used for the ICP-OES measurement. The contents of K, Na and S are expressed as %.

The measurement sample was prepared as follows for liquid samples: 1 mL of liquid sample was taken out by a pipette and transferred into a 100 mL volumetric flask. The volumetric flask was filled with deionized (DI) water up to the 100 mL mark, followed by complete homogenization. An appropriate amount of the solution was taken out by a pipette and transferred into a 100 mL or 250 mL volumetric flask for the second dilution. An appropriate amount of a concentrated nitric acid was added by a pipette to achieve 5% HNO₃ solution when brought to volume with deionized water (DI) and then homogenized. Finally, the solution was used for the ICP-OES measurement. The contents of Co, Mn, Ni, K, Na and S are expressed as g/L.

### Preparation example 1

First, a transition metal aqueous solution was prepared by dissolving NiSO₄, CoSO₄ and MnSO₄ into deionized water in the required stoichiometric ratios such that a molar ratio of Ni:Mn:Co in the 120 g/L resulting solution was 0.90:0.05:0.05. Then precipitation of a transition metal hydroxide was conducted by continuously feeding the transition metal aqueous solution, 220 g/L ammonia water and 220g/L potassium hydroxide aqueous solution to a reaction vessel equipped with baffles, a six-bladed turbine and a concentrator through which mother liquor can be withdrawn from the reaction vessel, and mixing such that the NH₃ concentration of the reaction mixture, i.e. aqueous slurry, was 3-5 g/L and the pH was 10.9±0.2, respectively. The precipitation was ended when an average particle diameter (D50) of the transition metal hydroxide reached approximately the target value of 5.0 µm. Throughout the precipitation, the mixing was done by rotating the turbine at 1050 rpm, the temperature of the slurry was kept at 85 °C inside the reaction vessel by heating and respectively an inert atmosphere was ensured by circulating nitrogen gas through the vessel. Thus, the transition metal hydroxide was obtained, and mother liquor was recovered from the slurry by filtering.

The recovered mother liquor was analyzed by the ICP-OES analysis method as described above; the results are reported in Table 2.

**Table 2. The content of the mother liquor (i.e. alkaline waste sulfate solution from the Preparation example 1) used in Examples 1-5 and Comparative examples 1-2**

| Mother liquor | Co (g/L) | Mn (g/L) | Ni (g/L) | K (g/L) | Na (g/L) | S (g/L) |
|---|---|---|---|---|---|---|
| Preparation example 1 | 0.0002 | 0.0001 | 0.0014 | 44.17 | 0.38 | 19.88 |

### Example 1

First, 1.5 L of the mother liquor of the Preparation example 1 and 1.5 L of 25 wt.% ammonia water was added to an airtight-sealed Erlenmeyer flask and mixed 30 minutes to obtain fully stirred mixture. Then, after two hours staying in the room temperature, e.g. around 18 °C to 22 °C, the mixture was Büchner filtered to separate the solid and liquid fractions and the solid fraction was washed with 25 mL of 25 wt.% ammonia water to remove possible impurities such as sodium residuals. Before the filtering, the NH₃ concentration of the mixture was analyzed, the result was 97 g/L.

The analysis of the obtained solid and liquid fractions, including X-ray diffraction (XRD) for the solid fraction and Inductively Coupled Plasma (ICP) of the elemental composition analysis for the solid and liquid fractions, were conducted as described above and the results are given in Table 5. Table 5 reports also the amount (in grams) of the obtained solid fraction and the conversion percentage of sulfate from the mother liquor to the obtained solid fraction, calculated by using the measured ICP results for the sulfur contents in the mother liquor and the filtrate.

### Example 2

First, 3.0 L of the mother liquor of the Preparation example 1 was placed to an Erlenmeyer flask, followed adding potassium hydroxide (KOH) pellets of 625 g in small batches while stirring continuously by a magnetic stirrer for 30 minutes. Then, the flask was sealed airtight, and the mixture was allowed to cool down to the room temperature (22 °C), followed by Büchner filtering to separate the solid and liquid fractions and washing the solid with 50 mL 25 wt.% ammonia water.

The similar analysis of the obtained solid and liquid fractions as in the Example 1 was conducted and the results are given in Table 5.

### Example 3

First, 200 mL of the mother liquor of the Preparation example 1 was placed to an Erlenmeyer flask connected airtight via a gas line to a round-bottomed flask having 600 mL of 25 wt.% ammonia water. Then, the round-bottomed flask was heated to boil the ammonia water to obtain gaseous ammonia (NH₃) conducted via the gas line below the liquid level of the mother liquor inside the Erlenmeyer flask. This contacting of the NH₃ gas with the mother liquor was continued for 3 hours. Then, after two hours staying in the room temperature, e.g. around 18 °C to 22 °C, the obtained mixture in the flask was Büchner filtered to separate the solid and liquid fractions and washing the obtained precipitate inside the Erlenmeyer (i.e. the solid fraction) flask with 10 mL of 25 wt.% ammonia water. Before the filtering, the NH₃ concentration of the obtained mixture was analyzed, the result was 147 g/L.

The similar analysis of the obtained solid and liquid fractions as in the Example 1 was conducted and the results are given in Table 5.

### Example 4

Eight separate examples were conducted, Examples 4.1-4.8, wherein in each example first, 200 mL of the mother liquor of the Preparation example 1 was placed to an Erlenmeyer flask, followed by adding an amount of potassium hydroxide (KOH) pellets as described in Table 3 in small batches while stirring continuously by a magnetic stirrer for 30 minutes. Then, the mixture was allowed to cool down to 15 °C, followed by Büchner filtering to separate the solid and liquid fractions and washing the solid fraction with 10 mL 25 wt.% ammonia water.

The similar analysis of the obtained solid and liquid fractions as in the Example 1 was conducted and the results are given in Table 5.

**Table 3. The amounts of the added mother liquor (i.e. alkaline waste sulfate solution from the Preparation example 1) and added KOH in Examples 4.1-4.8**

| Example | amount of added mother liquor (mL) | Amount of added KOH (g) |
|---|---|---|
| Ex 4.1 | 200 | 10 |
| Ex 4.2 | 200 | 20 |
| Ex 4.3 | 200 | 30 |
| Ex 4.4 | 200 | 40 |
| Ex 4.5 | 200 | 50 |
| Ex 4.6 | 200 | 75 |
| Ex 4.7 | 200 | 100 |
| Ex 4.8 | 200 | 125 |

### Example 5

Five separate examples were conducted, Examples 5.1-5.5, wherein in each example first, 200 mL of the mother liquor of the Preparation example 1 was placed to an Erlenmeyer flask, followed by adding an amount of potassium hydroxide (KOH) pellets as described in Table 4 in small batches while stirring continuously by a magnetic stirrer for 30 minutes. Then, the mixture was allowed to cool down to 22 ° C, followed by adding 200 mL of 25 wt.% ammonia water and sealing the flask airtight and stirring continuously by a magnetic stirrer for 60 minutes. Then the obtained mixture was Büchner filtered to separate the solid and liquid fractions and the solid fraction was washed with 10 mL 25 wt.% ammonia water.

The similar analysis of the obtained solid and liquid fractions as in the Example 1 was conducted and the results are given in Table 5.

**Table 4. The amounts of the added mother liquor (i.e. alkaline waste sulfate solution from the Preparation example 1), added KOH, added ammonia water and the molar ratio of KOH:NH₃, and NH₃ concentration in the mixture in Examples 5.1-5.5**

| Example | amount of added mother liquor (mL) | Amount of added KOH (g) | amount of added ammonia water (mL) | Molar ratio of KOH:NH₃ | NH3 concentration in the mixture (g/L) |
|---|---|---|---|---|---|
| Ex 5.1 | 200 | 3.45 | 200 | 1:100 | 102 |
| Ex 5.2 | 200 | 6.95 | 200 | 1:50 | 103 |
| Ex 5.3 | 200 | 10.44 | 200 | 1:32 | 101 |
| Ex 5.4 | 200 | 13.91 | 200 | 1:25 | 104 |
| Ex 5.5 | 200 | 27.82 | 200 | 1:12 | 97 |

### Comparative example 1

First, 200 mL of the mother liquor of the Preparation example 1 was placed to an Erlenmeyer flask, followed by evaporating the liquor until 50 mL of it was left in the flask. Then, the liquor left in the flask was allowed to cool down to 4.9 °C, followed by Büchner filtering to separate the solid and liquid fractions and washing the solid fraction with 10 mL of 25 wt.% ammonia water.

The similar analysis of the obtained solid and liquid fractions as in the Example 1 was conducted and the results are given in Table 5.

### Comparative example 2

First, 200 mL of the mother liquor of the Preparation example 1 was placed to an Erlenmeyer flask, followed by cooling the liquor to 2 °C. Then, the liquor was Büchner filtered to separate the solid and liquid fractions and the solid fraction was washed with 10 mL of 25 wt.% ammonia water.

The similar analysis of the obtained solid and liquid fractions as in the Example 1 was conducted and the results are given in Table 5.

**Table 5. The analysis results of the obtained solid and liquid fractions of Example 1**

| Exam ple | Obtain ed solid (g) | Conve rsion of SO₄ (%) | XRD analysis, main phase | ICP analysis (filtrate) | | | ICP analysis (solid) | | |
|---|---|---|---|---|---|---|---|---|---|
| | | | | K (g/L) | Na (g/L ) | S (g/L) | K (wt.%) | Na (wt.%) | S (wt.%) |
| Ex 1 | 99 | 83.10 | K₂(SO₄) | 8.56 | 0.40 | 3.36 | 45.39 | 0.08 | 18.27 |
| Ex 2 | 288 | 91.55 | K₂(SO₄) | 114.40 | 1.29 | 1.68 | 44.2 | 0.06 | 17.64 |
| Ex 3 | 18.25 | 94.62 | K₂(SO₄) | 250 | 0.52 | 1.07 | 45.63 | 0.32 | 18.20 |
| Ex 4.1 | 9.9 | 58.25 | K₂(SO₄) | 48.7 | 0.8 | 8.3 | 44.29 | 0.07 | 17.61 |
| Ex 4.2 | 13.9 | 77.36 | K₂(SO₄) | 67.6 | 0.9 | 4.5 | 45.62 | 0.07 | 18.08 |
| Ex 4.3 | 17.0 | 87.93 | K₂(SO₄) | 95.6 | 1.0 | 2.4 | 41.83 | 0.08 | 16.37 |
| Ex 4.4 | 19.0 | 92.45 | K₂(SO₄) | 122.7 | 1.0 | 1.5 | 45.05 | 0.07 | 17.21 |
| Ex 4.5 | 19.31 | 94.62 | K₂(SO₄) | 150.3 | 1.67 | 1.07 | 45.05 | 0.12 | 16.83 |
| Ex 4.6 | 20.88 | 97.28 | K₂(SO₄) | 203.8 | 1.42 | 0.54 | 45.06 | 0.29 | 16.26 |
| Ex 4.7 | 22.01 | 98.39 | K₂(SO₄) | 239.9 | 1.80 | 0.32 | 43.72 | 0.11 | 16.05 |
| Ex 4.8 | 22.27 | 98.99 | K₂(SO₄) | 310.6 | 2.51 | 0.20 | 45.6 | 0.10 | 15.72 |
| Ex 5.1 | 16.17 | 89.3 | K₂(SO₄) | 8.59 | 0.58 | 2.01 | 42.33 | 0.19 | 16.33 |
| Ex 5.2 | 18.02 | 93.2 | K₂(SO₄) | 11.00 | 0.59 | 1.28 | 42.32 | 0.14 | 16.14 |
| Ex 5.3 | 18.77 | 94.7 | K₂(SO₄) | 14.43 | 0.52 | 1.00 | 44.83 | 0.13 | 16.63 |
| Ex 5.4 | 19.35 | 96.9 | K₂(SO₄) | 16.91 | 0.54 | 0.58 | 48.89 | 0.10 | 18.33 |
| Ex 5.5 | 20.51 | 98.0 | K₂(SO₄) | 31.04 | 0.65 | 0.37 | 51.34 | 0.13 | 18.11 |
| CEx 1 | 16.85 | 22.79 | K₂(SO₄) | 36.66 | 0.59 | 15.35 | 41.07 | 0.11 | 17.17 |
| CEx 2 | 14.46 | 34.21 | K₂(SO₄) | 32.74 | 0.63 | 13.08 | 43.30 | 0.09 | 17.78 |

Referring to Table 5, the removal of sulfate from the alkaline waste sulfate solution was improved in every Examples 1-5 compared to the sulfate removal of the Comparative examples 1-2.

## Claims

1. A method for treating sulfate in an industrial process, the method comprising the steps of:
a) contacting a first solution containing metal sulfate, preferably transition metal sulfate, with a second solution containing potassium hydroxide, whereby obtaining
a. a first precipitated material comprising metal hydroxide and
b. a third solution containing potassium sulfate;
b) recovering the third solution;
c) providing a salting-out agent, preferably containing at least one of a source of potassium hydroxide and a source of ammonia;
d) adding the salting-out agent to and mixing with the third solution, whereby obtaining
a. a second precipitated material comprising potassium sulfate and
b. a fourth solution containing the salting-out agent; and
e) recovering the second precipitated material and the fourth solution.

2. The method according to claim 1, wherein a mixture solution comprising the third solution and the salting-out agent has a temperature T1, the method further comprising adjust the mixture solution comprising the third solution and the salting-out agent to a temperature of 50 °C or less when T1 is more than 50 °C, such as to a temperature of 2-50 °C; preferably the method further comprising adjusting the mixture solution to 30 °C or less when T1 is more than 30 °C, such as 2-25 °C.

3. The method according to claim 1 or 2, comprising concentrating, preferably by evaporation, the third solution before the step d) and/or during the step d).

4. The method according to any of the preceding claims, wherein a concentration of the sulfur in the third solution in the step d) is 15.00 g/L or more, such as in the range of 15.00-30.00 g/L, or 20.00 g/L or more, such as in the range of 20.00-50.00 g/L, as determined by ICP; and/or wherein a concentration of the potassium in the third solution in the step d) is 40.00 g/L or more, such as in the range of 40.00-80.00 g/L, or 50.00 g/L or more, such as in the range of 50.00-95.00 g/L, as determined by ICP.

5. The method according to any of the preceding claims, wherein the salting out agent comprises both of the source of ammonia and the source of potassium hydroxide, preferably a molar ratio of ammonia to potassium hydroxide is one of the following:
- a molar ratio of 1:1;
- a molar ratio with excess of the source of ammonia to the potassium hydroxide, such as 1.1:1 or more, 1.5:1 or more, 2:1 or more or 4:1 or more; and
- a molar ratio with excess of the potassium hydroxide to the source of ammonia, such of 1:1.1 or more, 1:1.5 or more, 1:2 or more or 1:4 or more.

6. The method according to claim 5, wherein the source of potassium hydroxide and the source of ammonia are added and mixed in any order, optionally the source of potassium hydroxide and the source of ammonia are added and mixed by:
- admixing at least a part of the source of ammonia to the third solution before admixing the source of potassium hydroxide;
- admixing at least a part of the source of potassium hydroxide to the third solution before admixing the source of ammonia; or
- admixing the source of potassium hydroxide and the source of ammonia simultaneously.

7. The method according to any of the preceding claims, wherein the salting-out agent comprises the source of potassium hydroxide, which is provided in solid form and/or as a solution containing potassium hydroxide of 25 wt.% by weight or more, such as in the range 25-75 wt.%.

8. The method according to any of the preceding claims, wherein the salting-out agent comprises the source of ammonia being ammonia water, preferably the salting-out agent has an ammonia concentration of 170 g/L or more, such as in the range of 170-550 g/L, or a concentration of 300 g/L or more, such as in the range of 300-550 g/L, or a concentration of 400 g/L or more, such as in the range of 400-550 g/L.

9. The method according to any of the preceding claims, wherein the salting-out agent comprises the source of ammonia being ammonia gas or an ammonia salt, such as ammonium sulfate.

10. The method according to any of the preceding claims, wherein the recovering the second precipitated material comprises filtering the second precipitated material to obtain a composition containing potassium sulfate, optionally prior to and/or during the filtering, the method comprises washing a filter cake comprising the second precipitated material with washing liquid containing ammonia water; wherein said composition is suitable to be used as fertilizer.

11. The method according to any of the preceding claims, comprising recycling the recovered fourth solution back to at least one of the steps a) to d).

12. The method according to any of the preceding claims, wherein the recovering the fourth solution comprises concentrating, preferably by evaporating, the fourth solution.

13. The method according to any of claims 1-12, wherein the salting out agent comprises the source of ammonia and the source of potassium hydroxide, and wherein the recovering the fourth solution comprising ammonia separating, preferably by ammonia stripping, to obtain a fifth solution containing a source of ammonia and a sixth solution containing potassium hydroxide, and wherein the method further comprising at least one of the following:
using the fifth solution as a chelating agent at the step a) by contacting the fifth solution with the first solution and the second solution;
using the fifth solution as the salting out agent at the steps c)-d);
using the sixth solution as the second solution at the step a), optionally subsequent to concentrating, preferably by evaporating, the sixth solution; or
using the sixth solution as the salting out agent at the steps c)-d).

14. The method according to claim 13, wherein the ammonia separating is followed by concentrating, preferably by evaporating, the fifth solution, preferably to a concentration of ammonia of 170 g/L or more, such as in the range of 170-550 g/L, in the fifth solution, and/or concentrating, preferably by evaporating, the sixth solution, preferably to a concentration of KOH of 100 g/L or more, such as in the range of 100-300 g/L or more in the sixth solution.

15. The method according to any of the preceding claims, wherein the industrial process is a process of battery industry, preferably wherein the first solution is an aqueous metal sulfate salt solution of M, said M comprising at least one of Ni, Mn, and Co, wherein the obtained first precipitated material being a particulate hydroxide or oxyhydroxide of M.
